# EUROPÄISCHE PATENTSCHRIFT

(11) **EP 2 829 396 B1**
(45) Veröffentlichungstag und Bekanntmachung des Hinweises auf die Patenterteilung: **23.12.2020**
(21) Anmeldenummer: 14177956.1
(22) Anmeldetag: 22.07.2014
(51) Int. Cl.: B32B 7/00, B32B 7/02, B32B 7/04, B32B 7/12, B32B 23/00, B32B 23/04, B32B 23/06, B32B 23/08, B32B 23/12, B32B 27/00, B32B 27/06, B32B 27/08, B32B 27/10, B32B 27/28, B32B 27/30, B32B 29/00, B32B 29/04, B32B 1/02

(54) **BEHÄLTER ZUR VERPACKUNG VON LEBENSMITTELN**
Container for packaging food
Récipient destiné à l'emballage de produits alimentaires

(30) Priorität: 22.07.2013 CH 12962013
(43) Veröffentlichungstag der Anmeldung: 28.01.2015
(73) Patentinhaber: Biopap S.r.l., 20019 Settimo Milanese (MI) (IT)
(72) Erfinder: Brassiolo, Maria Teresa, 20019 Settimo Milanese (IT); Anderlini, Michelangelo, 20019 Settimo Milanese (IT); Zagato, Luca, 20019 Settimo Milanese (IT)
(74) Vertreter: Riederer Hasler & Partner Patentanwälte AG

(56) Entgegenhaltungen:
- EP-A1- 0 865 915
- DE-A1- 2 144 023
- GB-A- 917 458
- GB-A- 1 389 287
- JP-A- H06 286 059

## Beschreibung

### Gebiet der Erfindung

Die Erfindung betrifft einen eigenstabilen Behälter gemäss Oberbegriff des Anspruchs 1.

### Stand der Technik

Aus dem Stand der Technik sind wiederverwertbare Schalen zur Verpackung von Lebensmitteln bekannt. Ein gegenwärtiger Trend ist es, Rohstoffe aus dem Nahrungsmittelbereich zur Herstellung der Schalen zu verwenden, welche auch als Biopolymere bekannt sind. Insbesondere Stärke aus Getreide oder Kartoffeln, aber auch Zuckerrohr kommt hier häufig zur Anwendung. Neben ihrer unbestrittenen Umweltverträglichkeit haben diese Rohstoffe aber den Nachteil, dass ihre Hitzebeständigkeit und Schmelzneigung mit denselben Eigenschaften von anderen Materialien aus dem Nicht-Lebensmittelbereich nicht konkurrieren können. Für temperaturresistente Nahrungsmittelverpackungen sind die meisten Biopolymere daher nicht geeignet. Auch sind diese Stoffe immer wieder in Verruf geraten Nahrungsmittelknappheiten zu verursachen, da Stärke für biopolymere Anwendungen oftmals staatlich gefördert ist.

Die GB 1 389 287 beschäftigt sich mit einem Auskleidungsmaterial für Kartons oder einem Umverpackungs-Material. Eine Zwischenschicht ist zu beiden Seiten mit einem Adhäsiv mit Aussenschichten verbunden. Das Auskleidungsmaterial umfasst daher drei Schichten und eine Verpackung sogar vier Schichten, nämlich die drei Schichten des Auskleidungsmaterials und die Kartonschicht. Die Aussenschichten sind Papierlagen. Die Zwischenschicht kann eine Barriereschicht aus einer beschichteten Zelluloselage sein. Die Beschichtung ist ein wässriges Copolymer mit einem Vinylidenchloride-Anteil. Im Vergleich mit herkömmlichem Auskleidungsmaterial, welches Wachs als eine Zwischenschicht besitzt, ist dieses Material hitzeresistenter bei Heissversiegelung. Auch kann die Wachszwischenschicht beim Falten beschädigt werden. Das Auskleidungsmaterial ist jedoch für einen direkten Kontakt mit Nahrungsmitteln ungeeignet, da die Aussenschichten aus Papier bestehen und die Barriereschicht zwischen den Aussenschichten angeordnet ist. Das Papier würde beim Kontakt mit Nahrungsmitteln aufweichen. Das Auskleidungsmaterial ist nicht dafür bestimmt eine Formstabilität zu besitzen und ist daher nur als Einschlag- bzw. Einwickelmaterial zu verwenden. Ausserdem ist eine vorgeschlagene Verpackung mit Karton sehr teuer, da sie aus vier Schichten besteht.

In der DE 2 144 023 ist eine Trägerbahn aus Zellulosehydratfasern beschreiben, welche sich mit Polyesterharz enthaltenden Schichten verbinden lässt. Zur Ermöglichung der Verbindung ist ein Haftvermittler auf Basis einer Eiweissverbindung vorgeschlagen. Polyesterharze sind jedoch nicht lebensmittelecht und daher im Lebensmittel-Verpackungsbereich völlig ungeeignet. Auch sind Polyesterharze nicht biologisch abbaubar.

In der GB 917 458 ist eine Folie für Werbetafeln vorgeschlagen, welche aus Cellulosehydrat hergestellt ist. Die Folie ist mit einem Adhäsiv auf die Werbetafel geklebt. Zur raschen Entfernung der Folie ist das Adhäsiv wasserlöslich. Für Lebensmittel, welche zumeist Wasser beinhalten ist diese Folieanwendung folglich völlig ungeeignet.

Die EP 0 865 915 beschreibt ein rezyklierbares und biologisch abbaubares, hitze- sowie tiefkühlbeständiges mehrschichtiges Laminat, insbesondere zur Aufbewahrung, zur Verpackung, zum Tiefkühlen, Aufwärmen und/oder zum Backen oder Braten von Lebensmitteln in Mikrowellen- und konventionellen Öfen. Das Laminat besitzt vorzugsweise eine Trägerschicht aus Karton und wenigstens eine zweite Schicht aus einem lebensmittelkonformen, hitze- und fettbeständigen Papier, einem Adhäsiv zur Verbindung der Trägerschicht und des Papiers sowie einer weiteren auf dem lebensmittelkonformen, fettbeständigen Papier vorgesehenen Antihaftschicht. Das erwähnte Papier ist vorzugsweise auch dampf- und wasserabstossend. Das aus Zellstoff bestehende Laminat ist vollständig biologisch abbaubar und eignet sich auch für eine Rezyklierung.

WO 2011/089015 offenbart ein mehrschichtiges Verpackungsmaterial, vorzugsweise mit feuchtigkeits- und / oder fettabstossenden Eigenschaften. Das Verpackungsmaterial umfasst mindestens eine Substratschicht und mindestens eine Barriereschicht. Die Substratschicht besteht aus Pappe, Papier oder Fasern aus nachwachsenden und / oder vorzugsweise biologisch abbaubaren Rohstoffen und einer einzelnen oder mehrlagigen Sperrschicht. Die Barriereschicht ist aus Papier, Karton oder Pergament hergestellt, welche imprägniert sind. Dieses Verpackungsmaterial ist vollständig biologisch abbaubar, jedoch für die Anwendung bei sehr hohen oder niedrigen Temperaturen, wie sie in Backöfen oder Tiefkühlgeräten auftreten, ungeeignet.

Die WO99/44909 befasst sich mit einem Material für Schalen oder Verpackungen, wobei das Material aus einer Anzahl von Schichten aufgebaut ist. Diese Schichten, gesehen von der Innenseite der Schale / Verpackung, umfassen eine erste Pergamentpapierschicht, eine Klebstoffschicht und eine zweite Pergamentpapierschicht. Außerhalb der zweiten Pergamentpapierschicht ist eine wasserabweisende Schicht aufgebracht. Diese äusserste Schicht besteht primär aus einem Acryl-Polymer oder einem Silikon. Da das Schichtmaterial auf Papierbasis hergestellt ist, besitzt es zwangsläufig eine hohe Wasserdampfdurchlässigkeit.

### Aufgabe der Erfindung

Aufgabe der Erfindung ist es daher einen Behälter zur Verpackung von Lebensmitteln vorzuschlagen, welcher rezyklierbar, biologisch abbaubar und kompostierbar ist, gleichzeitig zum Einfrieren bzw. Erhitzen in Öfen von Lebensmitteln geeignet ist und eine gute Barriere gegenüber Wasserdampf und Gasen besitzt.

### Beschreibung

Erfindungsgemäss wird die Aufgabe bei einem Behälter zur Aufbewahrung von Lebensmitteln gemäss Oberbegriff des Anspruchs 1 dadurch gelöst, dass die Barriereschicht eine Cellulosehydrat-Folie umfasst, welche wenigstens an der dem aufzubewahrenden Lebensmittel zugewandten oder abgewandten Seite mit einer ersten dampfsperrenden Beschichtung versehen ist. Die Beschichtung bewirkt, dass die Barriereschicht nicht von Wasserdampf durchdringbar ist. Andernfalls würde die Trägerschicht den Wasserdampf aufnehmen und sich aufweichen. Ferner hat eine solche Barriereschicht den weiteren Nutzen, dass sie die Trägerschicht bzw. den Behälter mechanisch verstärkt. So kann die Trägerschicht geringer und demzufolge materialschonender dimensioniert werden.

Zweckmässigerweise ist die Cellulosehydrat-Folie an der unbeschichteten Seite mit einer zweiten dampfsperrende Beschichtung versehen ist. Die Barriere für Wasserdampf, Gase und Aromen wird dadurch verdoppelt. Auch stellt das Vorsehen einer zweiten Beschichtung einen Sicherheitsgewinn dar, da bei Beschädigung einer Beschichtung die weitere Beschichtung noch intakt ist.

In einem besonders bevorzugten Ausführungsform ist die erste und zweite dampfsperrende Beschichtung eine Biopolymer-Beschichtung mit einem Polyvinylidenchlorid (PVCD)- Anteil. PVCD ist als ausgezeichneter Barrierestoff für Sauerstoff und Wasserdampf bekannt und besitzt auch eine gute Heisssiegelbarkeit bei 120- 160 °C. PVCD kann in die Biopolymer-Beschichtung homogen verteilt eingebracht sein. Denkbar ist es auch, dass PVCD als Beschichtung, Lackierung, Folie oder Sperrschicht auf der Bio-polymer-Beschichtung aufgebracht ist. Die biologische Abbaubarkeit der Barriereschicht ist durch das PVCD nicht beeinträchtigt.

Zweckmässigerweise beträgt der PVCD-Anteil höchstens 10 Gew%, bevorzugt höchstens 7 Gew% und besonders bevorzugt höchstens 5 Gew% des Biopolymer-Gewichtsanteils. Dieser Gewichtsanteil an PVCD in der Biopolymer-Beschichtung bringt alle Vorteile des PVCDs, wie gute Barriereeigenschaften und Heissiegelbarkeit ein, ohne dass die Lebensmittelverträglichkeit oder die biologische Abbaubarkeit des erfindungsgemässen Behälters bzw. Gefässes beeinträchtigt wären.

In einer weiteren bevorzugten Ausführungsform ist die Biopolymer-Beschichtung aus erneuerbaren Rohstoffen hergestellt. Solche nachhaltigen Biopolymer-Beschichtungen sind unabhängig von nicht nachwachsenden Rohstoffen und deren Hitzebeständigkeit wird ständig weiterentwickelt, sodass sie momentan bereits Temperaturen von bis zu 120 °C Stand halten.

In einer weiteren bevorzugten Ausführungsform umfasst die erste und zweite dampfsperrende Beschichtung Biopolymer-Nanopartikel. Dadurch bleibt die Barriereschicht auch mit der aufgebrachten wasserdampfsperrenden Beschichtung rezyklierbar, biologisch abbaubar und kompostierbar. Die Biopolymer-Nanopartikel sind aus einem Verfahren erhältlich, welches einen Vernetzungsschritt unter Verwendung eines Vernetzungsmittel (z.B. ein Polyaldehyd) umfasst. Die Biopolymer-Nanopartikel werden mit üblichen Beschichtungsverfahren wie rollen, spritzen, sprayen, drucken, tauchen usw. aufgebracht. Die vernetzten Nanopartikel bilden eine dichte Beschichtung mit sehr geringen Durchlässigkeitswerten für Wasserdampf und Gase. Bevorzugt ist die Biopolymer-Nanopartikel Beschichtung aus nachwachsenden Rohstoffen, welche nicht zur Nahrungsmittelerzeugung geeignet sind. Dazu zählen Cellulose, Hemicellulose Chitin, Inulin und Lignin. Auch können Derivate und/oder Mischungen dieser Rohstoffe zum Einsatz kommen.

Als vorteilhaft erweist es sich, wenn die Nanopartikel eine mittlere Partikelgrösse von 5 bis 300 nm, bevorzugt von 10 bis 200 nm und besonders bevorzugt von 10 bis 100 nm haben. In diesem Partikelbereich ergeben sich die besten Barriereeigenschaften
In einer besonders bevorzugten Ausführungsform ist der offene Rand des Behälters ein rundum laufender Bördelrand. Durch das Vorsehen des Bördelrandes kann die Steifigkeit und die Formstabilität des Behälters verbessert werden. Bevorzugt ist ein umlaufender Bördelrand, wenngleich es auch denkbar ist, dass der Bördelrand nur an den geraden Rändern vorgesehen ist und im Bereich der Ecken ausgespart ist. Der Bördelrand ermöglicht es auch, dass sich entsprechende leere gestapelte Behälter leichter entstapeln lassen. Dies liegt daran, dass der Bördelrand ineinander gestapelte Behälter geringfügig beabstandet und diese dadurch weniger fest zusammenstecken.

Mit Vorteil ist eine wasserabweisenden Schicht, bevorzugt aus einem Acrylpolymer, an der dem aufzubewahrenden Lebensmittel abgewandten Seite der Trägerschicht angeordnet. Der Karton oder das Papier der Trägerschicht ist durch diese Schicht vor Wasser von aussen geschützt. In Kühl- oder Tiefkühlschränken mit feuchten Oberflächen ist ein äusserlicher Feuchtigkeitsschutz besonders vorteilhaft.

Dadurch, dass die Wasserdampfdurchlässigkeit der Barriereschicht bei 38 °C und 90% Luftfeuchtigkeit über 24 Stunden weniger als 40 g/m², bevorzugt weniger als 30 g/m² und ganz besonders bevorzugt weniger als 15 g/m² beträgt, kann die Barriereschicht, welche die Cellulosehydrat-Folie und wenigstens eine wasserdampfsperrende Beschichtung aufweist, als nahezu dampfdicht bezeichnet werden.

Mit Vorteil beträgt die Sauerstoffdurchlässigkeit der Barriereschicht bei 23 °C und 50% Luftfeuchtigkeit über 24 Stunden weniger als 30 cm³/m².24h.bar, bevorzugt weniger als 15 cm³/m².24h.bar und ganz besonders bevorzugt weniger als 10 cm³/m².24h.bar. Dadurch lässt sich ein Nahrungsmittel in dem Gefäss frisch halten und ist vor Luftsauerstoff ausreichend geschützt.

In einer weiteren bevorzugten Ausführungsform ist das Laminat frei von einem Adhäsiv und dessen Funktion ist von der zweiten dampfsperrenden Beschichtung übernommen, welche eine Nanopolymer-Beschichtung ist. Es versteht sich, dass die zweite Beschichtung zwischen Cellulosehydrat-Folie und Trägerschicht angeordnet sein muss, um diese Schichten zu verkleben. Da die Nanobiopolymer-Beschichtung gute Heissklebeeigenschaften besitzt, kann auf ein zusätzliches Adhäsiv verzichtet werden.

Als vorteilhaft erweist es sich, wenn die Barriereschicht transparent ist. Dadurch lässt sich die Barriereschicht und/oder die Trägerschicht mit Werbung, Logos, Anleitungen, Informationen usw. bedrucken und ist für den Benutzer des Gefässes lesbar.

Von Vorteil ist es, wenn die Barriereschicht heiss- oder kaltsiegelbar ist, da dann eine Verschlussfolie rasch auf den Siegelrand des Gefässes aufbringbar ist, um das Gefäss zu verschliessen.

In einem weiteren Ausführungsbeispiel hat die Barriereschicht eine Dicke zwischen 10 und 50 µm, und bevorzugt zwischen 20 und 30 µm. Diese Dicke ist optimiert, damit sich die Barriereschicht gut tiefziehen lässt, um zusammen mit der Trägerschicht ein dreidimensionales Behältnis zu bilden. Andererseits weist die Barriereschicht mit dieser Schichtdicke gute mechanische Eigenschaften auf, damit die Schichtdicke der Trägerschicht reduziert werden kann.

Damit der gesamte Behälter rezyklierbar, biologisch abbaubar und kompostierbar ist, ist es bevorzugt, wenn auch die Barriereschicht diese Eigenschaften aufweist.

Vorteilhaft ist es, wenn das Laminat tiefzieh- und thermoformbar ist, um daraus Nahrungsmittelbehälter herstellen zu können. Dazu muss das Laminat ausreichende mechanische Festigkeit aufweisen, um nicht während des Tiefziehprozesses zerrissen oder Beschädigt zu werden. Auch muss es ausreichend flexibel sein, damit sich ein Siegelrand ausformen lässt, an welchem sich der Behälter mit einer Folie versiegeln lässt. Ein weiterer Aspekt dieser Erfindung betrifft auch vorstehend beschriebenes Laminat, da dieses auch für andere Anwendungen als ein Gefäss denkbar ist. Dazu zählen beispielsweise Werbungsflächen hergestellt aus dem erfindungsgemässen Material. Weitere Vorteile und Merkmale ergeben sich aus der nachfolgenden Beschreibung eines Ausführungsbeispiels der Erfindung unter Bezugnahme auf die schematischen Darstellungen. Es zeigt in nicht massstabsgetreuer Darstellung:

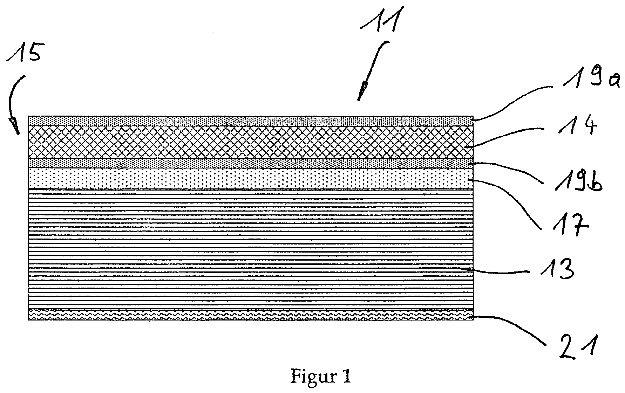

- Figur 1:: Einen Querschnitt durch das erfindungsgemässe Laminat.

Der erfindungsgemässe Behälter zur Verpackung von Lebensmitteln ist aus einem Laminat hergestellt. In Figur 1 ist das Laminat, insbesondere Verpackungslaminat, welches gesamthaft mit dem Bezugszeichen 11 bezeichnet ist, gezeigt. Die Basis des Laminats bildet eine Trägerschicht 13, welche dem Laminat Stabilität gibt. Die Trägerschicht 13 ist bevorzugt ein Karton, ein steifes ein- oder mehrlagiges Papier oder aus Zellstofffasern hergestellt. Die Trägerschicht 13 ist bevorzugt aus reiner mechanisch zerkleinerter und gebleichter Pulpe hergestellt. Damit die Trägerschicht zur Herstellung von Gefässen tiefgezogen werden kann, weist sie eine entsprechende Zugfestigkeit auf. Der Herstellausschuss kann dadurch reduziert und die Produktionsgeschwindigkeit erhöht werden. Die Dehnbarkeit liegt dabei bei 3% und bevorzugt bei 6%. Auch ist die Trägerschicht so steif, dass sie den Anforderungen an ein Lebensmittelgefäss und insbesondere eine Lebensmittelschale gerecht wird. Neben Schalen kann das Verpackungslaminat in Schüsseln, Bechern, Tabletts usw. ausgeformt werden.

Die Trägerschicht 13 besitzt eine innere erste Oberfläche, welche dem zu verpackenden Lebensmittel zugewandt ist, und eine zweite äussere Oberfläche, welche dem Lebensmittel abgewandt ist. An der äusseren Oberfläche ist bevorzugt eine wasserabweisende Schicht 21 vorgesehen. Diese wasserabweisende Schicht 21 kann beispielsweise aus einem Acrylpolymer bestehen, da diese Polymere die biologische Abbaubarkeit und die Anforderungen an den Temperaturbereich nicht beeinträchtigen. Die wasserabweisende Schicht 21 kann während des Laminier-oder während eines -Druckverfahrensschrittes im Offset- oder Flexodruckverfahren aufgebracht werden. Für ein rezyklierbares und biologisch abbaubares Verpackungslaminat versteht sich, dass auch die wasserabweisende Schicht 21 und alle anderen Laminatschichten diese Eigenschaften besitzen müssen. Werden Lebensmittel in einem Gefäss aus dem erfindungsgemässen Verpackungslaminat tiefgefroren, so ist es wichtig, dass die Trägerschicht 13 mit der wasserabweisenden Schicht 21 versehen ist, da in einem Tiefkühler immer gefrorenes Wasser, welches in die Trägerschicht 13 eindringen könnte, vorhanden ist.

Die Barriereschicht 15 ist an der inneren Oberfläche der Trägerschicht 13 an selbiger aufgebracht. Dies kann mit einem Adhäsiv 17 erfolgen. Das Adhäsiv 17 enthält einen möglichst geringen Wassergehalt, um auf ein Nachtrocknen des Adhäsivs 17 verzichten zu können. Ein zu hoher Wassergehalt macht die Trägerschicht nämlich wellig und diese verliert ihre plane Oberfläche. Ferner muss das Adhäsiv 17 Temperaturen von -40 °C bis minimale 140 °C und bevorzugt bis 220°C standhalten, da das Verpackungslaminat 11 zum Einfrieren, Auftauen und Erhitzen von Lebensmitteln geeignet sein soll. Generell ist es bevorzugt, wenn der eigenstabile Behälter zur Verpackung von Lebensmitteln Temperaturen zwischen -40 °C und 220°C standhält.

Die Barriereschicht 15 umfasst bevorzugt eine Folie 14, welche aus einem Cellulose-Regenerat hergestellt sein kann. Denkbar sind auch andere sogenannte Biopolymere, sofern sie aus nachwachsenden Rohstoffen hergestellt sind, welche Rohstoffe bevorzugt nicht für die Lebensmittelproduktion vorgesehen sind, und biologisch abbaubar sind. Cellulosehydrat ist auch als Zellglas bekannt und wird aus einem Celluloseregenerat hergestellt. Cellulosehydrat besitzt bekannter Weise eine hohe Wasserdampfdurchlässigkeit, wodurch Kondenswasserbildung in einer geschlossenen Cellulosehydrat-Verpackung verhindert werden kann. Wasserdampfdurchlässigkeit ist bei dem vorliegenden Verpackungslaminat 11 jedoch unerwünscht, da der das Cellulosehydrat durchdringende Wasserdampf die Trägerschicht 13 aufweicht. Aus diesem Grund ist die Folie 14das wenigstens an der dem Lebensmittel zugewandten Seite mit einer ersten dampfsperrenden Beschichtung 19a versehen, für welche Beschichtung 19a das Cellulosehydrat als Trägerfolie 14 dient. Bevorzugt ist auch an der dem Lebensmittel abgewandten Seite eine zweite dampfsperrende Beschichtung 19b aufgebracht, um die Dampfsperre noch weiter zu verbessern und eine weitere Sicherheitsbarriere zu besitzen. Dies ist insbesondere dann von Vorteil, wenn die erste Beschichtung 19b verletzt werden würde. Ein weiterer Vorteil der zweiten Beschichtung 19b ist, dass diese als Adhäsiv 17 wirken kann und die Barriereschicht 15 mittels der zweiten dampfsperrenden Beschichtung 19b mit der Trägerschicht 13 verklebt werden kann. Dies kann, da die Beschichtungen 19a,19b heisssiegelbar sind, durch Anwendung von Wärme und Druck erfolgen. Die Barriereschicht 15 stellt neben der Barriere für Wasserdampf auch eine Barriere für Gase, Flüssigkeiten und Fette dar. Die dampfsperrenden Beschichtungen 19a,19b sind bevorzugt eine Biopolymer-Beschichtung mit Polyvinylidenchlorid (PVCD)-Anteil oder umfassen Biopolymer-Nanopartikel, welche beide hervorragende dampfsperrende Eigenschaften besitzen und auch für Gase, beispielsweise Sauerstoff, eine Barriere darstellen. Auch besitzen die dampfsperrenden Biopolymer-Beschichtungen 19a,19b durch den PVCD- oder Nanopartikel-Anteil gute Heisssiegeleigenschaften. PVCD ist in die Biopolymer-Beschichtung bevorzugt homogen verteilt eingebracht. Der Gewichtsanteil an PVCD ist dabei möglichst gering gehalten, damit die Biopolymer-Beschichtung zwar optimierte Barriere- und Heissiegeleigenschaften aufweist, Lebensmittelverträglichkeit und biologische Abbaubarkeit des Gefässes jedoch nicht beeinträchtigt sind. Der Wasserdampfdurchgang beträgt bei 38°C und 90% Luftfeuchtigkeit über 24 h lediglich 10 g/m². Der O₂ Durchgang beträgt bei 25°C und 50% Luftfeuchtigkeit über 24 h lediglich 3 g/m². Die Grösse der verwendeten Nanopartikel liegt bevorzugt im Bereich von 10 bis 100 nm, wodurch die hervorragenden Barriereeigenschaften der Beschichtung 19a,19b zustande kommt. Die Beschichtungen 19a,19b sind heisssiegelbar, wodurch ein Gefäss aus dem Verpackungslaminat 11 mit einer Folie durch Heisssiegeln verschliessbar ist. Dadurch entstehen Klebeverbindungen mit einer Stärke von 200g/25mm. Auch sind die Beschichtungen 19a,19b aus einem rezyklierbarem und biologisch abbaubaren Bio-Polymer. Das Bio-Polymer kann Cellulose, Hemicellulose, Stärke oder Chitin oder ein Derivat davon und/oder Mischungen davon sein. Bevorzugt sind nachwachsende Rohstoffe, welche nicht als Lebensmittel zur Anwendung kommen, wenngleich auch Kohlenhydrate, Pflanzen-und Tierproteine, Polysaccharide und andere Nahrungsmittelgrundbaustoffe denkbar sind. Zur Herstellung des Bio-Polymers wird ein mechanisch thermoplastisches Verfahren angewendet, das einen Vernetzungsschritt unter Verwendung eines Vernetzungsmittels umfasst. Die Beschichtungen 19a,19b können mit bekannten Beschichtungsverfahren, wie Drucken, Walzenstreichen, Tauchen und Sprayen aufgebracht werden.

Die Barriereschicht 15 hat eine Reissfestigkeit von 22% in der Bearbeitungsrichtung und 70% in Querrichtung. Die Barriereschicht 15 und die Beschichtungen 19a,19b sind transparent, wodurch ein auf der Trägerschicht 13 aufgebrachter Druck auf der Innenseite des Verpackungslaminats 11 sichtbar ist. Da, wie obenstehend bereits ausgeführt, die Barriereschicht 15 und die Beschichtungen 19a,19b gute mechanische Eigenschaften besitzen, kann die Trägerschicht 13 geringer dimensioniert werden, und das Verpackungslaminat besitzt trotzdem die geforderten mechanischen Eigenschaften.

Die Barriereschicht 15 besitzt eine Dicke von 10 bis 50 µm und bevorzugt von 20 bis 30 µm, um die geforderten Eigenschaften zu erhalten.

Das Verpackungslaminat 11 lässt sich durch die Eigenschaften der einzelnen Schichten 13, 14, 17, 19 und 21 unter Wärme und Druck in das Gefäss tiefziehen, ist rezyklierbar, biologisch abbaubar, kompostierbar und aus erneuerbaren, nachwachsenden Ressourcen hergestellt, welche bevorzugt nicht als Lebensmittel zum Einsatz kommen. Als kompostierbar wird das Laminat bezeichnet, da es die EN 13432 erfüllt und innerhalb von 12 Wochen zu mindestens 90 % abgebaut ist.

### Legende:

- 11: Laminat, Verpackungslaminat
- 13: Trägerschicht
- 14: Cellulosehydrat-Folie, Trägerfolie
- 15: Barriereschicht
- 17: Adhäsiv
- 19a,19b: Erste und zweite dampfsperrende Beschichtung
- 21: Wasserabweisende Schicht

## Patentansprüche

1. Eigenstabiler Behälter zur Aufbewahrung von Lebensmitteln, ausgeformt aus einem Laminat (11) umfassend
- eine Trägerschicht (13) aus Karton, hergestellt aus mechanisch zerkleinerter Pulpe, einem ein- oder mehrlagigen Papier, Zellstoff oder Sekundärfasern,
- wenigstens eine Barriereschicht (15), aus einem, fett-, wasser- und hitzebeständigen Material auf der dem aufzubewahrenden Lebensmittel zugewandten Seite und
- ein Adhäsiv (17) zur Verbindung der Trägerschicht (13) und der Barriereschicht (15), wobei die Trägerschicht (13), das Adhäsiv (17) und die Barriereschicht (15) lebensmittelecht sind,
**dadurch gekennzeichnet,**
**dass** die Barriereschicht (15) eine Cellulosehydrat-Folie (14) umfasst, welche wenigstens an der dem aufzubewahrenden Lebensmittel zugewandten oder abgewandten Seite mit einer ersten dampfsperrenden Beschichtung (19a,19b) versehen ist.

2. Behälter nach Anspruch 1, **dadurch gekennzeichnet, dass** die Cellulosehydrat-Folie (14) an der unbeschichteten Seite mit einer zweiten dampfsperrende Beschichtung (19a,19b) versehen ist.

3. Behälter nach Anspruch 2, **dadurch gekennzeichnet, dass** die erste und zweite dampfsperrende Beschichtung (19a,19b) eine Biopolymer-Beschichtung mit einem Polyvinylidenchlorid (PVCD)- Anteil ist.

4. Behälter nach Anspruch 3, **dadurch gekennzeichnet, dass** der PVCD-Anteil höchstens 10 Gew%, bevorzugt höchstens 7 Gew% und besonders bevorzugt höchstens 5 Gew% beträgt.

5. Behälter nach einem der Ansprüche 3 oder 4, **dadurch gekennzeichnet, dass** die Biopolymer-Beschichtung aus erneuerbaren Rohstoffen hergestellt ist.

6. Behälter nach Anspruch 2, **dadurch gekennzeichnet, dass** die erste und zweite dampfsperrende Beschichtung (19a,19b) Biopolymer-Nanopartikel umfasst.

7. Behälter nach Anspruch 6, **dadurch gekennzeichnet, dass** die Nanopartikel eine mittlere Partikelgrösse von 5 bis 300 nm, bevorzugt von 10 bis 200 nm und besonders bevorzugt von 10 bis 100 nm haben.

8. Behälter nach einem der Ansprüche 1 bis 7, **dadurch gekennzeichnet, dass** der offene Rand des Behälters ein rundum laufender Bördelrand ist.

9. Behälter nach einem der Ansprüche 1 bis 8, **dadurch gekennzeichnet, dass** eine wasserabweisenden Schicht (21), bevorzugt aus einem Acrylpolymer, an der dem aufzubewahrenden Lebensmittel abgewandten Seite der Trägerschicht (13) angeordnet ist.

10. Behälter nach einem der Ansprüche 1 bis 9, **dadurch gekennzeichnet, dass** die Wasserdampfdurchlässigkeit der Barriereschicht (15) bei 38 °C und 90% Luftfeuchtigkeit über 24 Stunden weniger als 40 g/m², bevorzugt weniger als 30 g/m² und ganz besonders bevorzugt weniger als 15 g/m² beträgt.

11. Behälter nach einem der Ansprüche 1 bis 10, **dadurch gekennzeichnet, dass** die Sauerstoffdurchlässigkeit der Barriereschicht (15) bei 23 °C und 50% Luftfeuchtigkeit über 24 Stunden weniger als 30 cm³/m².24h.bar, bevorzugt weniger als 15 cm³/m².24h.bar und ganz besonders bevorzugt weniger als 10 cm³/m².24h.bar beträgt.

12. Behälter nach einem der Ansprüche 1 bis 11, **dadurch gekennzeichnet, dass** das Laminat (11) frei von einem Adhäsiv (17) ist und dessen Funktion von der zweiten dampfsperrenden Beschichtung (19b) übernommen ist, welche eine Nanobiopolymer-Beschichtung ist.

13. Behälter nach einem der Ansprüche 1 bis 12, **dadurch gekennzeichnet, dass** die Barriereschicht (15) heiss- oder kaltsiegelbar ist.

14. Behälter nach einem der Ansprüche 1 bis 13, **dadurch gekennzeichnet, dass** die Barriereschicht (15) rezyklierbar, biologisch abbaubar und kompostierbar ist.

15. Behälter nach einem der Ansprüche 1 bis 14, **dadurch gekennzeichnet, dass** das Laminat (11) tiefzieh- und thermoformbar ist, um daraus eigenstabile Nahrungsmittelbehälter herstellen zu können.

## Claims

1. Inherently stable container for storing food molded from a laminate (11) comprising:
- a carrier layer (13) of cardboard produced from mechanically shredded pulp, from a single-ply or multi-ply paper, cellulose or secondary fibers,
- at least one barrier layer (15) from a greaseproof, water-repellent and heat-resistant material on the side turned to the foodstuff to be stored and
- an adhesive (17) for bonding the carrier layer (13) and the barrier layer (15), wherein the carrier layer (13), the adhesive (17) and the barrier layer (15) are food safe,
**characterized in**
**that** the barrier layer (15) comprises a cellulose hydrate foil (14) that is provided, on the side turned to or opposed to the foodstuff to be stored, with a first vapour-barrier coating (19a, 19b).

2. Container according to claim 1, **characterized in that** the cellulose hydrate foil (14) is provided, on the uncoated side, with a second vapour-barrier coating (19a, 19b).

3. Container according to claim 2, **characterized in that** the first and the second vapour-barrier coating (19a, 19b) is a biopolymer coating with a polyvinylidene chloride (PVCD) percentage.

4. Container according to claim 3, **characterized in that** the PVCD percentage is a maximum of 10% by weight, preferably a maximum of 7% by weight and particularly preferably a maximum of 5% by weight.

5. Container according to one of the claims 3 or 4, **characterized in that** the biopolymer coating is produced from renewable raw materials.

6. Container according to claim 2, **characterized in that** the first and the second vapour-barrier coating (19a, 19b) contains biopolymer nanoparticles.

7. Container according to claim 6, **characterized in that** the nanoparticles have a mean particle size of 5 to 300 nm, preferably of 10 to 200 nm and particularly preferably of 10 to 100 nm.

8. Container according to one of the claims 1 to 7, **characterized in that** the open edge of the container is a peripheral beaded edge.

9. Container according to one of the claims 1 to 8, **characterized in that** a hydrophobic layer (21), preferably of an acrylic polymer, is placed on the side of the carrier layer (13) that is opposed to the foodstuff to be stored.

10. Container according to one of the claims 1 to 9, **characterized in that** the water vapour permeability of the barrier layer (15) is, at 38°C and 90% air humidity over 24 hours, less than 40 g/m², preferably less than 30 g/m² and most preferably less than 15 g/m².

11. Container according to one of the claims 1 to 10, **characterized in that** the oxygen permeability of the barrier layer (15) is, at 23°C and 50% air humidity over 24 hours, less than 30 cm³/m².24h.bar, preferably less than 15 cm³/m².24h.bar and most preferably less than 10 cm³/m².24h.bar.

12. Container according to one of the claims 1 to 11, **characterized in that** the laminate (11) is free from adhesive (17) and the function of which is taken over by the second vapour-barrier coating (19b) that is a nanobiopolymer coating.

13. Container according to one of the claims 1 to 12, **characterized in that** the barrier layer (15) is heat sealable or cold sealable.

14. Container according to one of the claims 1 to 13, **characterized in that** the barrier layer (15) is recyclable, biodegradable and compostable.

15. Container according to one of the claims 1 to 14, **characterized in that** the laminate (11) is deep drawable and thermoformable in order to be able to produce inherently stable food containers therefrom.

## Revendications

1. Récipient à stabilité intrinsèque pour conserver des aliments, moulé à partir d'un laminé (11), comprenant :
- une couche porteuse (13) en carton, fabriquée en pulpe broyée mécaniquement, en un papier en une ou plusieurs couches, en cellulose ou en fibres secondaires,
- au moins une couche barrière (15) en un matériau résistant à la graisse, à l'eau et à la chaleur, sur le côté tourné vers l'aliment à conserver et
- un adhésif (17) pour la liaison de la couche porteuse (13) et de la couche barrière (15), cependant que la couche porteuse (13), l'adhésif (17) et la couche barrière (15) sont de qualité alimentaire,
**caractérisé en ce**
**que** la couche barrière (15) comprend une feuille d'hydrate de cellulose (14) qui est pourvue, au moins sur le côté tourné vers ou opposé à l'aliment à conserver, d'une première enduction avec une barrière à la vapeur (19a, 19b).

2. Récipient selon la revendication 1, **caractérisé en ce que** la feuille d'hydrate de cellulose (14) est pourvue, sur le côté non enduit, d'une seconde enduction avec une barrière à la vapeur (19a, 19b).

3. Récipient selon la revendication 2, **caractérisé en ce que** la première et la seconde enduction avec une barrière à la vapeur (19a, 19b) est une enduction de biopolymère avec une proportion de chlorure de polyvinylidène (PVDC).

4. Récipient selon la revendication 3, **caractérisé en ce que** la proportion de PVDC est de maximum 10% en poids, de préférence de maximum 7% en poids et de manière particulièrement préférée de maximum 5% en poids.

5. Récipient selon l'une des revendications 3 ou 4, **caractérisé en ce que** l'enduction en biopolymère est fabriquée à partir de matières premières renouvelables.

6. Récipient selon la revendication 2, **caractérisé en ce que** la première et la seconde enduction avec une barrière à la vapeur (19a, 19b) comprend des nanoparticules de biopolymère.

7. Récipient selon la revendication 6, **caractérisé en ce que** les nanoparticules ont une taille moyenne de particules de 5 à 300 nm, de préférence de 10 à 200 nm et de manière particulièrement préférée de 10 à 100 nm.

8. Récipient selon l'une des revendications 1 à 7, **caractérisé en ce que** le bord ouvert du récipient est un bord rabattu tout autour.

9. Récipient selon l'une des revendications 1 à 8, **caractérisé en ce qu'**une couche hydrophobe (21), de préférence en un polymère acrylique, est placée sur le côté de la couche porteuse (13) qui est opposé à l'aliment à conserver.

10. Récipient selon l'une des revendications 1 à 9, **caractérisé en ce que** la perméabilité à la vapeur d'eau de la couche barrière (15) est, à 38°C et pour 90% d'humidité de l'air pendant 24 heures, inférieure à 40 g/m², de préférence inférieure à 30 g/m² et de manière particulièrement préférée inférieure à 15 g/m².

11. Récipient selon l'une des revendications 1 à 10, **caractérisé en ce que** la perméabilité à l'oxygène de la couche barrière (15) est, à 23°C et pour 50% d'humidité de l'air pendant 24 heures, inférieure à 30 cm³/m².24h.bar, de préférence inférieure à 15 cm³/m².24h.bar et de manière particulièrement préférée inférieure à 10 cm³/m².24h.bar.

12. Récipient selon l'une des revendications 1 à 11, **caractérisé en ce que** le laminé (11) est exempt d'adhésif (17) et dont la fonction est assumée par la seconde enduction avec une barrière à la vapeur (19b) qui est une enduction de nanobiopolymère.

13. Récipient selon l'une des revendications 1 à 12, **caractérisé en ce que** la couche barrière (15) est thermoscellable ou scellable à froid.

14. Récipient selon l'une des revendications 1 à 13, **caractérisé en ce que** la couche barrière (15) est recyclable, biodégradable et compostable.

15. Récipient selon l'une des revendications 1 à 14, **caractérisé en ce que** le laminé (11) est emboutissable et thermoformable pour pouvoir en fabriquer le récipient alimentaire à stabilité intrinsèque.
